# EUROPEAN PATENT SPECIFICATION

(11) **EP 1 386 465 B1**
(45) Date of publication and mention of the grant of the patent: **14.05.2008**
(21) Application number: 01935212.9
(22) Date of filing: 08.05.2001
(51) Int. Cl.: H04L 29/06, H04Q 7/22

(54) **METHOD AND SYSTEM FOR CONTROLLING THE TRANSMISSION OF MEDIA STREAMS**
VERFAHREN UND SYSTEM ZUR STEUERUNG VON DER ÜBERTRAGUNG DER MEDIENSTRÖME
PROCEDE ET SYSTEME PERMETTANT DE REGLER LA TRANSMISSION DE TRAINS DE DONNEES MULTIMEDIA

(43) Date of publication of application: 04.02.2004
(73) Proprietor: TELEFONAKTIEBOLAGET LM ERICSSON (publ), 164 83 Stockholm (SE)
(72) Inventor: HAMELEERS, Heino, NL-6471 VN Kerkrade (NL); HUNDSCHEIDT, Frank, NL-6463 BK Kerkrade (NL); VALENTINE, Eric, Lee, Plano, TX 75075 (US)
(74) Representative: HOFFMANN EITLE
(86) International application number: PCT/US2001/014990
(87) International publication number: WO 2002/091708

(56) References cited:
- WO-A-00/74322
- WO-A-99/22575
- WO-A-99/23794
- GB-A- 2 313 258

## Description

### Field of the Invention

The present invention relates to a method for controlling the transmission of media streams over a connection that employs a plurality of protocol layers, and to a communication system having media stream providing equipment and communication equipment.

### Background of the Invention

Communication methods and systems are known, where a plurality of media streams are transmitted over a given connection. The term "media stream" refers to a stream carrying a specific type of information, such as video information, audio information, data information (e.g. computer files, etc.), etc. An example of an arrangement for transmitting a plurality of media streams is the so-called H.324 multimedia communication standard as described in ITU-T recommendation H.324 (03/96), or in an article by Dave Lindbergh in IEEE Communications Magazine, December 1996, pages 46-51 (XP000636453). Other examples of standards for handling a plurality of media streams are H.320, H.323 and H.310, which are each described in respective ITU-T recommendations.

These standards can be used both for multimedia transmissions in a strict sense, i.e. in which at least some of the media streams are synchronized (e.g. the audio and video streams are synchronized to achieve lip synchronization), and for multimedia transmissions in a loose sense, i.e. for transmitting independent media streams carrying different kinds of media, where no synchronization is required between any of the individual streams.

The transmission of a plurality of media streams will generally be conducted in the following way. At first, in a suitable communication device, such as a terminal having multimedia capabilities, a control process at an application layer will initiate the set-up of a communication connection over a suitable transmission system, such as a telephone network. Namely, the application will request a connection having a certain bandwidth depending on the stream to be transported, e.g. 64kbps, in order to carry one video stream (e.g. 48kbps), one speech stream (e.g. 8kbps), a control signalling stream (e.g. 8kbps; using a suitable control protocol, such as H.245 in connection with H.324), and a stream for rate adaption/multiplexing overhead (e.g. 8kbps; in accordance with a suitable adaption/multiplexing protocol, such as H.223 in the H.324 system).

Once the connection is set-up with the requested bandwidth, the control procedure at the application layer feeds the respective media streams into a lower layer, where the structure of the lower layer and layers thereafter is determined by the selected multimedia communication standard. For example, when adopting the H.324 standard, the media streams are passed to a layer using the H.245 control protocol, and thereafter a layer possibly implementing rate adaptation and multiplexing according to H.223. The multiplexed data stream is then passed on to a link layer and physical layer that handle the data further. The link layer and physical layer may e.g. provide multi-circuit or multi-bearer capabilities, such as ISDN (Integrated Services Digital Network) or UMTS (Universal Mobile Telecommunication System).

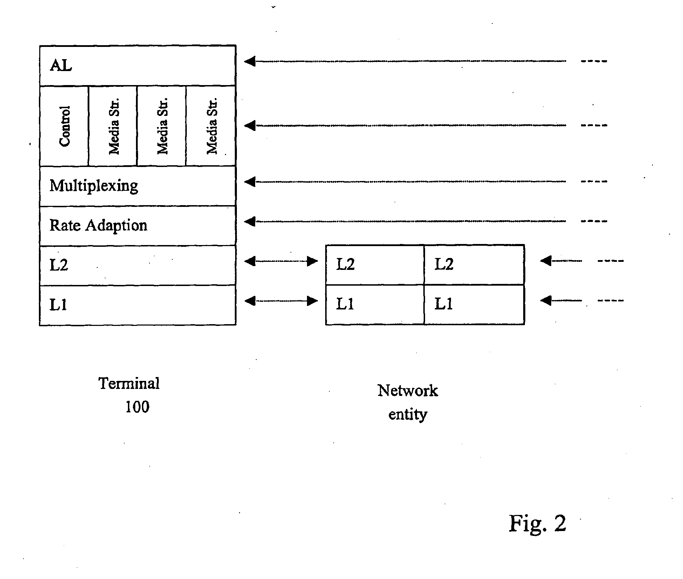

Fig. 2 shows a schematic representation of such a layer structure, where the protocol stack on the left hand side is implemented in a terminal device, and the protocol stack on the right hand side shows a network entity containing peers for the physical layer L1 and link layer L2 of the respective peers in the terminal. Other peers are not shown for simplicity, but are indicated by the dashed lines on the right hand side of Fig. 2.

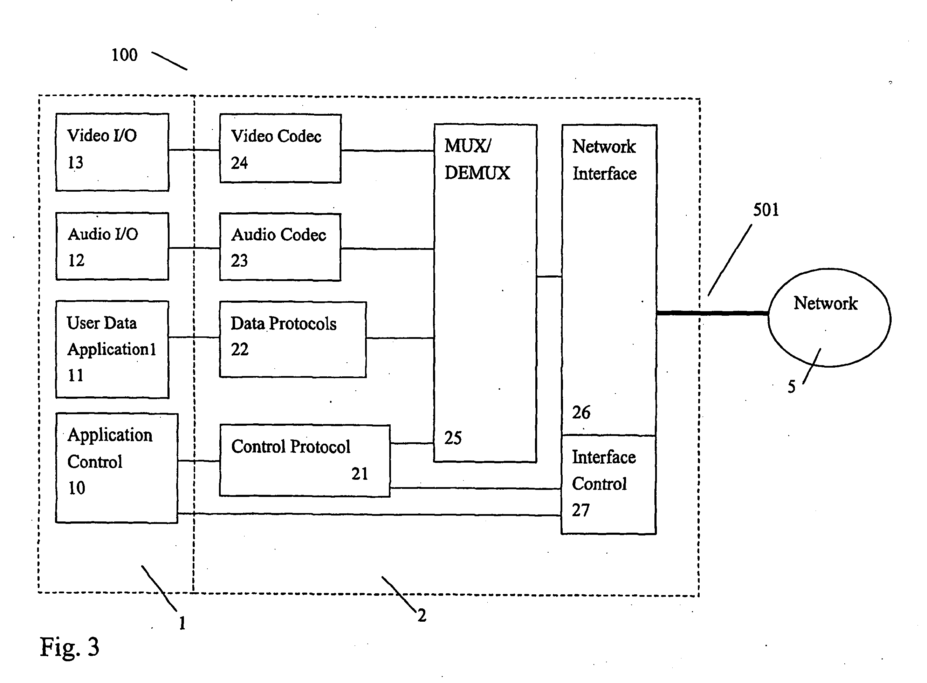

An example of the structure of such a terminal is shown in Fig. 3, where the terminal is generally referred to as 100. In the example of Fig. 3, the terminal 100 comprises media stream providing equipment 1 and communication equipment 2. Such media stream providing equipment is also sometimes referred to as Data Terminal Equipment (DTE), and such communication equipment is sometimes also referred to as Data Communication Equipment (DCE), especially in connection with mobile communication systems. As can be seen, an application control 10 controls the transmission and receipt of respective media streams from and into a video I/O 13, an audio I/O 12 and a user data application 11. Namely, the video I/O 13 transmits and receives video streams, the audio I/O 12 transmits and receives audio streams, and the user data application 11 transmits and receives data streams. Video I/O 13 is connected with a video codec 24, audio I/O 12 is connected with an audio codec 23, the user data application 11 is connected to a data protocol handler 22, and the application control 10 is connected to a control protocol handler 21. The control protocol handler 21 implements the control protocol associated with the multimedia standard used, e.g. H.245. Each of the units 21 to 24 is connected to a multiplexing/demultiplexing (and possibly rate adapting) unit 25, which in turn is connected to a network interface 26 that operates under the control of an interface control 27. The interface control 27 is generally connected with the application control 10. The network interface handles the connection to a network 5, e.g. via the above-mentioned link layer and physical layer protocols. It may be noted that the elements shown in Fig. 3 can be provided by hardware, software or any suitable combination of hardware and software. For example, the application control 10 and the interface control 27 can be respective procedures running on a single processor.

WO97/44922 describes a multimedia conferencing system for use during a cellular network handover. A multimedia terminal described in this document processes three types of media. The terminal comprises appropriate media signal processors and a multiplexer-demultiplexer for multiplexing/demulitplexing the media streams. Also, a cell selection processor is provided, which receives quality signals related to the media streams from a multiplexer/demultiplexer in the form of a digital information stream. Media requirements and priorities are stored in a processor, and data concerning measurements and signal strength in adjacent cells is provided by a controller, which receives this information from the network. The information in the processor includes bandwidth requirements, delay constraints and maximum bit error rate. The cell selection processor can suggest a candidate cell for a cell handover during a multimedia communication based on the different information received. The document mentions that a candidate cell might not have enough bandwidth to accommodate a media that requires a high bandwidth. In some situations certain media will have to be dropped.

### Object of the Invention

The object of the present invention is to improve existing methods and systems for transmitting media streams.

### Summary of the Invention

This object is solved by a method having the features of claim 1, and by a communication system having the features of claim 13.

In accordance with embodiments of the present invention, the transmission of media streams over a connection employing a plurality of protocol layers is controlled in such a way that the number of media streams fed into the connection at a first protocol layer, e.g. the application layer, and the data rates of one or more media streams fed into the connection is adjusted in accordance with information from a protocol layer below said layer at which the media streams are fed into the connection, e.g. is obtained from the link layer, where said information is indicative of the bandwidth provided in said connection.

In this way, the procedure controlling the feeding of media streams into the connection is made adaptable with respect to the state of the connection, and especially to changes in the state of the connection that influence the bandwidth. As an example, if the connection is provided over a cellular mobile communication system, the handover of the connection from one cell to another can lead to a change in the provided bandwidth. It is also possible that a network will change the allocation of bandwidth to the connection for a certain user, e.g. due to the necessity to assign more bandwidth to another priority connection, which is done by reducing the bandwidth of already established connections. Such procedures are naturally not restricted to wireless networks, but can also be implemented in wire bound communication networks, such as ISDN networks.

The advantage of adjusting the number of media streams in accordance with bandwidth information from a lower layer, especially on the basis of information that indicates a change in bandwidth, is that the handling and transmission of media streams is done very efficiently and in a simple way. Namely, e.g. if a communication device sending a plurality of media streams, such as a multimedia terminal, receives the indication that the bandwidth is going to change, e.g. due to a handover, it can simply adjust the number of streams, e.g. by removing a stream for which the bandwidth is no longer sufficient. An example of this is if an established connection having e.g. 64kbps is reduced to 16kbps due to a handover to a cell that cannot provide more bandwidth, whereupon the control procedure feeding media streams into the connection can simply remove one or more streams, e.g. a video stream of 48kbps, and otherwise continue the transmission of remaining streams, such as an audio stream and a control stream. In other words, the general session in the transmission mode that allows the sending of a plurality of media streams is retained, but the number of streams is adjusted.

The advantage of this is that the standard approach to the management of bandwidth changes would consist in taking down the entire session relating to a sending of several media streams, and setting up a completely new session for a different mode. For example, this would mean ending a multimedia transmission mode and switching to a simple voice mode. This standard approach would, however, lead to a high signalling load, as the taking down of the multimedia session and setting up of the voice mode session would incur a high amount of control signalling between the end terminals of the communication, and also between the end terminals and the network entities carrying the communication between the two end terminals. For example, if the multimedia session is set-up in accordance with H.324, or more specifically the third generation of H.324 for mobile communication devices (3G.324M), then a fall back from multimedia to speech mode requires V8N.8bis (PSTN) or V.140 (ISDN) signalling support, in order to provide interworking with the external networks to which the mobile communication network is connected. These protocols are not widely used, and the adaptation to arbitrary external networks would require the provision of respective interworking protocols for each possible external network.

In contrast thereto, the present invention provides a highly effective solution that can be implemented with very little change to existing systems. For example, in accordance with a preferred embodiment, only the control procedures in a terminal device are different from prior art systems, in that the communication equipment in a terminal device detects bandwidth changes, and accordingly notifies the control procedure handling the feeding of media streams into the connection in the data terminal equipment, without any changes to the network being necessary.

The basic concept of adjusting the number of media streams fed into a connection on the basis of bandwidth information from a lower layer can also be applied during the set-up of the connection, namely if the control procedure at the first protocol layer, e.g. the application layer, requests a certain amount of bandwidth in order to transmit predetermined media streams, but is allocated less bandwidth by the network. Namely, the control procedure at the first protocol layer can then adjust the number of media streams fed into the connection in accordance with the allocated amount of bandwidth.

In prior art systems the allocation of an insufficient amount of bandwidth for a desired communication having a plurality of media streams simply leads to the connection being rejected, i.e. no communication being established. In accordance with an embodiment of the present invention, the communication system desiring to transmit a plurality of media streams can then adjust the number of media streams from the initially desired number to a different number that is in accordance with the allocated bandwidth. As an example, if a mobile terminal desires to establish a communication in which video and audio data is to be sent in respective streams, but the set-up request is only answered by the allocation of an insufficient amount of bandwidth, then the control procedure can adapt to the allocated bandwidth by e.g. only feeding an audio stream and a control stream into the connection having the allocated bandwidth. According to a preferred embodiment, the system can then at a later point adjust the number of media streams if the amount of bandwidth in the connection is later augmented, such that it is later possible to adjust the number of media streams by adding the initially intended video stream to the communication. Again, this can be done without having to switch between different transmission modes, i.e. between a multimedia mode and a voice mode.

### Brief Description of Figures

Embodiments of the present invention shall now be described with reference to the attached figures, in which
- Fig. 1: shows a schematic overview of a basic embodiment of the present invention;
- Fig. 2: shows protocol stacks in association with which the present invention can be implemented;
- Fig. 3: shows a terminal device in which the present invention can be implemented;
- Fig. 4a: shows a basic example of a signalling exchange between terminal equipment and a network, in accordance with an embodiment of the present invention;
- Fig. 4b: shows a more detailed example of a signalling exchange between terminal equipment and a network, in accordance with an embodiment of the present invention;
- Fig. 5a: shows a partial flow chart of steps performed in a control procedure for feeding media streams into a connection at an application layer;
- Fig. 5b: shows a partial flow chart of a control procedure for controlling a protocol implementation at a layer below the application layer, and which is designed to interact with the control procedure shown in Fig. 5a; and
- Fig. 6: shows a partial flow chart of a control procedure implemented at the application layer, at which media streams are fed into a connection, for adjusting the number of streams in accordance with a bandwidth allocation message received in response to a request for a predetermined amount of bandwidth.

### Detailed Description of Preferred Embodiments

Now detailed embodiments of the present invention shall be described with reference to the attached figures. It may be noted that the same reference numerals identify the same or equivalent elements throughout the figures.

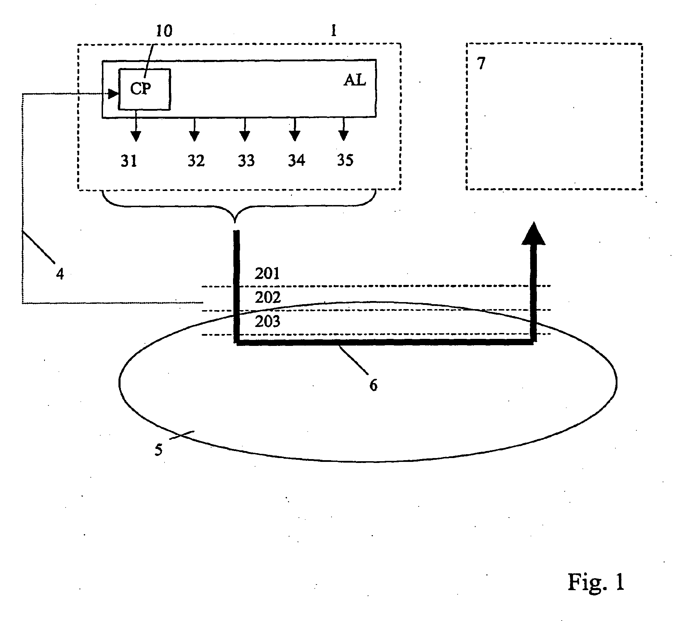

Fig. 1 shows a schematic representation of a basic embodiment of the present invention. Reference numeral 1 refers to media stream providing equipment that is operable to provide a plurality of media streams 31, 32, 33, 34, 35. These media streams 31 - 35 are fed into a connection 6, where said connection 6 employs a plurality of protocol layers 201, 202, 203. The connection 6 can be established and maintained in any suitable or desirable way.

The feeding of media streams 31 - 35 to the connection 6 occurs at an application layer (AL) protocol implementation running under control of a control procedure 10. The control procedure 10 is provided by a suitable combination of hardware and software and serves to control the generation and processing of the plurality of media streams 31 - 35.

In accordance with the present invention, the control procedure 10 is arranged in such a way that it receives information 4 from a lower layer, in the example of Fig. 1 from layer 202, where said information 4 is indicative of the bandwidth provided in connection 6. Moreover, the control procedure 10 is arranged to adjust the number of media streams 31, 32, 33, 34, 35 fed into connection 6 in accordance with said information 4. In other words, in accordance with the information 4, the number of streams can be changed.

As already mentioned above, connection 6 can be provided in any suitable or desirable way. Usually, the connection 6 using a plurality of protocol layers will comprise a transmission system for setting up the connection, such as a communication network 5. The connection 6 will also typically comprise equipment belonging to a communication device, namely so-called data communication equipment. This shall be explained in more detail further on.

Finally, Fig. 1 also shows an element 7, which simply represents the receiving equipment that implements the receiving peer associated with the AL implementation in media stream providing equipment 1. For reasons of simplicity, no details are shown. However, it may be noted that the media stream providing equipment 1 having the AL implementation and corresponding control procedure 10 will usually also be arranged to receive media streams, and element 7 will be arranged to send such streams. In other words, equipment 1 and 7 will set-up a multimedia session, in which media streams are exchanged. However, it may be noted that this is not required for the present invention, because it is also possible that equipment 1 only sends media streams.

Fig. 2 shows a terminal device 100 having an application layer AL, below which a network layer/transport layer is implemented, which provides features for controlling and transmitting media streams. It can also e.g. comprise a rate adaptation layer and a multiplexing layer for multiplexing the media streams into a single stream.

The multiplexed stream is then passed to a link layer L2 and a physical layer L1, which have corresponding peers in the network. The network entity shown in Fig. 2 itself communicates with other network entities, or servers in other networks, and the connection finally ends at a terminal device (not shown) that contains the AL peer corresponding to the AL peer in terminal 100 (see equipment 7 in Fig. 1). This is well known in the art and does not need to be explained further here.

The terminal 100 can be arranged as e.g. shown in Fig. 3, namely having a media stream providing equipment 1, and communication equipment 2. As Fig. 3 has already been explained, a further explanation is not necessary here.

Regarding the protocols used in the various layers shown in Fig. 2, these may be selected as is suitable or desirable.

For example, if the H.324 multimedia communication standard is used, then the stream control is performed in accordance with H.245 and the multiplexing in accordance with H.223, if the multimedia standard is H.320, then the control is performed in accordance with H.242 and the multiplexing in accordance with H.221, if the multimedia standard is H.323, then control is performed in accordance with H.245 and multiplexing in accordance with H.225.0, and if the multimedia standard is H.310, then control is performed in accordance with H.245 and multiplexing in accordance with H.222.

The information 4 used by the control procedure 10 can be any suitable information indicative of the bandwidth in the connection 6, i.e. an information that is indirectly indicative or directly indicative of the bandwidth.

According to a preferred embodiment, this information 4 is a connection state change information, i.e. an information that indicates that the state of the connection is going to change, is changing or has changed. An example is a message indicating a handover from one cell of network 5 to another cell. It may be noted that the connection state change information does not need to contain an explicit indication of a bandwidth change. Rather, it is possible that the simple indication of a certain event, such as a handover, will let the control procedure 10 at the application layer perform a corresponding media stream adjusting response, such as always dropping a video stream, if such a video stream is currently being fed into the connection. Then, after the handover is complete, the control procedure 10 can start re-transmitting the previously dropped video stream. Such an operation provides the effect of reducing the network load during a handover procedure. Naturally, dropping the video stream is only an example, and the control procedure can be arranged to drop one or more streams of one or more types of media.

The determination of when a handover is completed can be done in any suitable or desired way, e.g. by receiving an explicit handover complete message, or simply by starting a timer upon receiving the message that a handover is to take place, where the timer has a preset value corresponding to the average or measured time for a handover procedure. The latter solution has the advantage that no explicit signalling from network elements to the terminal are necessary.

The concept of haying an information 4 that is indirectly indicative of the bandwidth, or indirectly indicative of a bandwidth change, can especially be applied in the context of a cellular communication system, in which cells are provided that may operate in accordance with different telecommunication standards. More specifically it is possible to have a first telecommunication standard that is offered only in certain cells or areas, where mobile stations are capable of identifying such cells, and where communication coverage outside of these selected areas is provided by a different telecommunication standard, and the mobile stations capable of operating in accordance with the first telecommunication standard are also able to operate in accordance with the second telecommunication standard. An example of this is the providing of specific areas, in which UMTS service is provided, whereas outside of these designated areas, service is provided by a GSM network. In mobile stations that are able to operate in accordance with UMTS and GSM, the handover from an UMTS cell to a non-UMTS-cell can be seen as an indication of a bandwidth change, even if the message informing of the handover does not contain any explicit bandwidth information. Therefore, in accordance with an embodiment of the invention, the control procedure 10 at the application layer is arranged such that the receipt of a message indicating a handover from a cell of a first telecommunication standard (e.g. UMTS) to the cell of a second telecommunication standard (e.g. GSM) leads to an appropriate adjustment operation of the streams being fed into the connection, e.g. to a dropping of all video streams. This operation can also be conducted in the inverse direction, e.g. when receiving an indication of a handover from a cell of one telecommunication standard (e.g. GSM) to a cell of another telecommunication standard (e.g. UMTS), then the control procedure can be operated to start sending streams of a specific type of media, e.g. video streams. Naturally, GSM and UMTS are only examples of telecommunication standards, and the above mentioned concept can be applied to the switching over between any two different telecommunication standards.

Although it is possible, that the connection state change information only contains an indirect indication of the bandwidth, as explained in the previous examples, it is preferable that an information is used that explicitly provides bandwidth change information. In other words, it is preferable that a message indicating a handover also indicates the accompanying change in bandwidths, if such a change in bandwidth occurs. Then the control procedure 10 can be arranged to perform a comparison of the new bandwidth (i.e. the bandwidth provided by the connection 6 after the change of connection state) with one or more predetermined thresholds, in order to then appropriately adjust the number of media streams in accordance with the new bandwidth. As an example, if the sum of the media streams being fed into the connection 6, exceeds a new, lower bandwidth available after handover, then the control procedure 10 can determine which and how many of the streams are to be taken down, in order to obtain a condition according of which the sum of the remaining streams is smaller or equal to the new bandwidth.

Such an explicit change of bandwidth can e.g. be communicated in association with a handover procedure from a first cell of a cellular communication system to a second cell, where the traffic conditions in the second cell only allow a lower bandwidth for connection 6 than the first cell The second cell may operate in accordance with the same telecommunication standard as the first cell, or in accordance with a different standard, as in the examples above.

Another example of information indicative of the bandwidth of the connection 6 is a direct bandwidth change information, e.g. issued by the network to the terminals of a specific connection, when the network intends to reduce the bandwidth of the connection associated with said terminals, for example because the network requires more bandwidth for connections having a higher priority, such that the bandwidth of lower priority connections is reduced. Then, as already explained above in connection with the other embodiments, the control procedure 10 in the application layer can adjust the number of streams being fed into connection 6 in accordance with the new value of the bandwidth. Also, at a later point in time it is possible that the network will again increase the bandwidth assigned to the connection, e.g. because the handling of priority connections no longer requires additional bandwidth, and in response to a corresponding message from the network the control procedure 10 can again feed media streams into the connection 6 that were previously dropped.

Additionally, in all of the above described embodiments, the control procedure 10 can also change the data rate of one or more of the adjusted number of media streams, in order to better accommodate the adjusted number of streams in the new bandwidth.

According to another embodiment of the present invention, the information 4 that is indicative of the bandwidth provided in the connection 6 can also be a bandwidth allocation information issued during a set-up procedure for the connection 6. Namely, according to the present embodiment, the control procedure 110 is arranged in such a way that during the set-up of a connection 6, which is initiated by the control procedure 10, a request for a certain amount of bandwidth is sent to the network 5 providing the connection. The requested bandwidth will depend on the number of streams that the control procedure intends to send, and on the individual data rate for each of said streams. Then, if the response to said request is the allocation of the requested bandwidth, the control procedure will start sending the intended number of media streams. On the other hand, if the response to the request indicates the possibility of a connection 6 being set-up (e.g. the request is not simply rejected), but that the requested bandwidth can not be allocated, and a smaller amount of bandwidth is allocated, then the control procedure 10 can adjust the intended number of streams to the allocated bandwidth, e.g. by refraining from sending one or more of the intended streams until the remaining streams in sum do not exceed the allocated bandwidth.

Additionally, the control procedure 10 can also change the data rate of one or more of the adjusted number of media streams, in order to better accommodate the adjusted number of streams in the allocated bandwidth.

In the present invention, information that is indicative of the bandwidth provided in a connection, is used for adjusting the number of media streams fed into the connection at a first protocol layer, where the information is obtained at a second layer below that first protocol layer. As shown in Figs. 1 and 2, the first protocol layer can be the application layer, and the second protocol layer can be any layer below the application layer, e.g. the network layer/transport layer (NL/TL), the link layer (LL), or the physical layer (PL). More specifically, the information is passed from a control procedure for controlling the operation of one of the protocol implementations below the application layers, to the control procedure for controlling the implementation of the application layer.

As already mentioned, the information provided to the application layer can come from any layer below. Preferably, it comes from the link layer (L2 in Fig. 2).

The information 4 indicative of the bandwidth provided in connection 6 can come from any physical entity involved in connection 6, where said physical entity implements the (lower) protocol layer providing the information. In other words, if the connection 6 is established over a communication network, then the information can be provided by an entity in the network. For example, in the cellular mobile telephone network, a base station controller or a base transceiver station can directly send signals to the control procedure 10 at the application layer in a mobile terminal device. The sending of such an information can be done in any suitable or desired way e.g. through in-band signalling along connection 6, or outside of the protocol stack that establishes connection 6, by a dedicated signalling connection.

Fig. 3 shows a terminal system 100 to which the present invention can be applied. As already explained previously, the terminal system 100 shown in Fig. 3 has media stream providing equipment 1 and communication equipment 2. The media stream providing equipment 1 can be in a separate physical unit from the communication equipment 2, for example it can be provided by a laptop computer or a digital personal assistant, palm top computer, etc., while the communication equipment 2 is provided by a telephone or mobile telephone that has a suitable interface for connection with the media stream providing equipment 1. Equally, it is possible that the terminal system 100 is a single physical unit, such that the media stream providing equipment 1 and the communication equipment 2 form a single device, such as a multimedia telephone terminal.

According to a preferred embodiment of the invention, the information 4 that is indicative of the bandwidth provided in connection 6 is passed from the procedure providing the interface control 27 to the procedure providing the application control 10. It may be noted that these two procedures can be implemented in two different processors (e.g. as will be the case if the media stream providing equipment 1 and communication equipment 2 are in separate physical units), or can be two procedures running in a single processor (as will be the case if the media stream providing equipment 1 and communication equipment 2 are provided in a single physical device). However, it always remains that the information 4 is passed from a lower layer to a higher layer, e.g. from the physical layer to the application layer.

The advantage of passing information from one element of a terminal system to another element of the same terminal system lies in the fact that in this case no modification of the network 5 (more specifically of elements in the network 5) is necessary. Namely, it is possible that information indicative of the bandwidth in the connection, or indicative of a change in bandwidth in a connection, that is present at the link layer implementation providing the network interface 26, can be processed to serve as a basis for adjusting the number of media streams fed into the connection by the media stream providing equipment 1. An example of such information that is already present at the link layer is an assignment message for switching to a new channel or performing a handover procedure, as is e.g. well known from GSM or other mobile communication systems. Then, the presence of such a message can be processed into a designated bandwidth information by interface control 27, and then passed to application control 10, or alternatively, the message at the link layer can be passed directly from the interface 27 to the application control 10, where it is then processed into information suitable for controlling the feeding of media streams into connection 6.

In this connection it may be noted that although the information indicative of the bandwidth in the connection is preferably obtained at an entity in the terminal system that also feeds the media streams into the connection, the providing of such information can still be triggered by messages or events in the network, e.g. by messages sent by network entities, such as for example the above mentioned assignment messages.

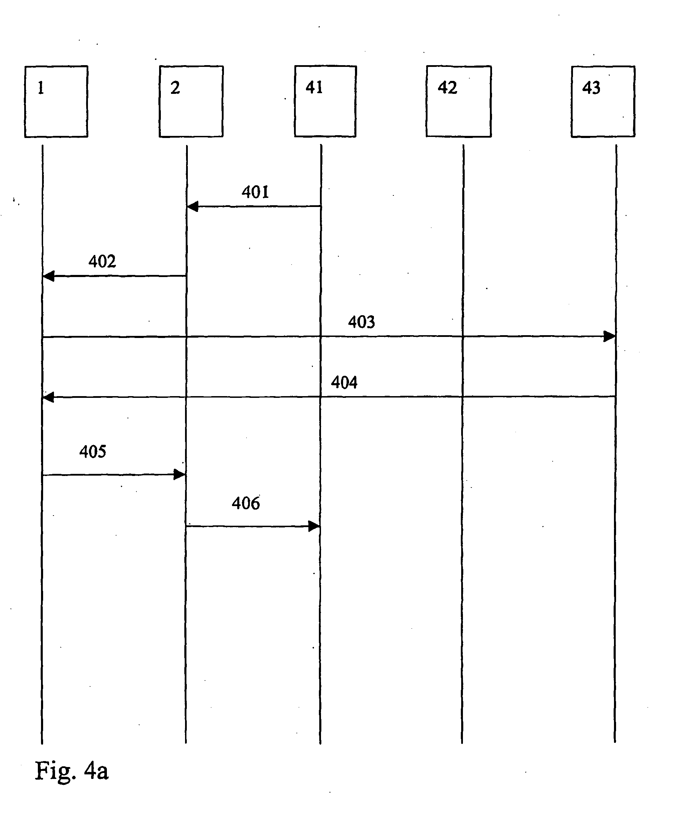

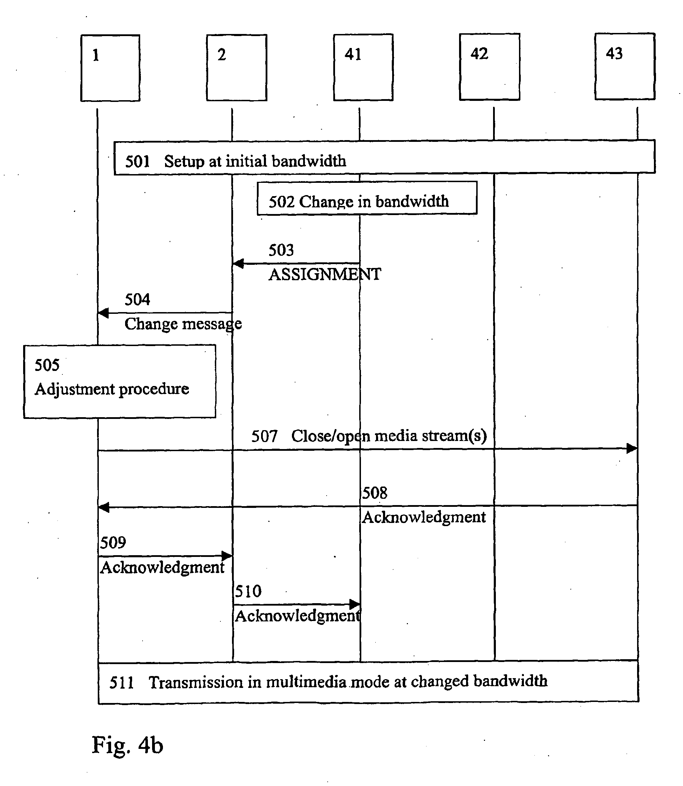

Now an example of a sequence of events and signals shall be shown in connection with Figs. 4a and 4b, said signals and events occurring in accordance with an embodiment with the present invention.

Fig. 4a shows an example where media stream providing equipment 1 at an application layer feeds one or more media streams (not shown) into a connection to a corresponding application layer peer at media stream providing (and receiving) equipment 43. The connection is provided over communication equipment 2, which in the example of Fig. 4a may be a mobile communication device, a radio access network (RAN) 41 and one or more core networks 42 that provide the further connection to the media stream peer 43.

In the example of Fig. 4a, at some point in time during the transmission of media streams, the radio access network 41 sends a message 401 to the communication equipment 2, which describes the air interface resources. For example, this can be an assignment command that tells the communication equipments to switch to a new channel, or can be an assignment command that directly assigns a new bandwidth. In response thereto, the communication equipment 2 sends a message 402 to the media stream providing equipment 1, where said message 402 informs the media stream providing equipment 1 of a change in bandwidth. In response thereto, the control procedure handling the feeding of media streams at the application layer in media stream providing equipment 1, determines if the number of media streams should be changed in response to the changing bandwidth, and if it is decided to reduce or increase the number of media streams, an appropriate message 403 is sent to the application layer peer 43, such that one or more media streams are removed or added. Such a procedure can be conducted with the help of the usual control standards used in the multimedia standard, e.g. H.245 in the H.324 multi media standard.

Then respective acknowledgement messages 404, 405 and 406 that correspond to messages 403, 402 and 401 are sent. Thereafter the changed number of media streams is fed into the connection, until the next change in bandwidth occurs which could lead to a further reduction of bandwidth, or to an increase. In the event of a reduction, more streams can be removed, and in the event of an increase in bandwidth, previously removed streams can start to be sent again.

Fig. 4b shows a more detailed example of the sequence of events shown in Fig. 4a. The same reference numerals as in Fig. 4a refer to the same elements. In the detailed example of Fig. 4b, reference numeral 501 represents a call set-up procedure performed in accordance with the specifications of the employed network and terminal devices. For example, a call or connection can be set-up in which 64 kbps are allocated, and an application in the media stream providing equipment 43 generates video and audio streams accordingly. For example, within the 64 kbps bearer or circuit, the applications may set-up one speech stream (e.g. 8 kbps) and one video stream (e.g. 48 kbps). The remaining kbps are allocated to control signals (e.g. ITU-T H.245) and rate adaptation/multiplexing overhead (e.g. ITU-T H.223).

Reference numeral 502 indicates a change in the available bandwidth, for example the bandwidth is lowered to 14.4 kbps. The reasons for such a change in bandwidth can be numerous, for example the change can be due to a handover to another area or cell that cannot provide the initial bandwidth of 64 kbps. This could be due to the handover from a cell of a first telecommunication standard (e.g. UMTS) to a cell of another telecommunication standard (e.g. GSM), or because of a handover from a first area or cell that has sufficient capacity, to a second area or cell that is highly congested. Alternatively, the change in available bandwidth can also be due to a network control operation, in which resources are reassigned to other connections of higher priority.

Reference numeral 503 represents an assignment command, in which the radio access network 41 assigns the new data rate of 14.4 kbps to the communication equipment 2, where said assignment occurs at the link layer.

In response thereto, the communication equipment 2 provides an event message 504 to the media stream providing equipment 1, in which the new data rate 14.4 kbps is communicated. 505 represents the processing in the control procedure at the application layer in media stream providing equipment 1, which determines that the available bandwidth of 14.4. kbps is not enough to carry both the audio and video stream, and in the example of Fig. 4b, the procedure implemented in control procedure 10 is such that the application decides to close one or more of the media streams, e.g. the video stream.

It may be noted that the precise decision process in control procedure 10 at the application layer of media stream providing equipment 1 can be chosen in any suitable or desired way, and will preferably be adjustable by the user of the media stream providing equipment. Namely, the user should have the possibility of setting the control procedure such that certain media streams are preferably dropped or preferably re-added, in accordance with the decrease or increase in available bandwidth.

Then, the application in media stream providing equipment 1 and 43 close one or more media streams with messages 507, 508, for example by using the CloseLogicalChannel procedure known from ITU-T H.245.

Reference sign 509 indicates the acknowledgment with which the application in media stream providing equipment stream informs the communication equipment that the new data rate has been accepted, namely once the necessary streams have been closed. Finally, at 510, the communication informs the network that the new data rate has been accepted.

Reference sign 511 indicates the continuation of media stream transmission at the new (lower) bandwidth. For example, this could consist in the applications at 1 and 43 only generating audio streams.

The sequence of signals in the event of a bandwidth increase are very similar, except that corresponding complementary messages are sent, namely instead of a CloseLogicalChannel procedure, an OpenLogicalChannel procedure known from ITU-T H.245 is used for opening new media streams at messages 507 and 508.

As already mentioned above, the control procedure 10 and the application layer of media stream providing equipment 1 is preferably arranged such that a user or subscriber may adjust specific options. Examples of such options are:
- the order of media streams to be closed in case not enough bandwidth is available anymore to carry all media streams,
- close one or more media streams or terminate the whole session in case not enough bandwidth is available anymore to carry more media streams,
- whether to set-up previously closed media streams as soon as more bandwidth becomes available again,
- intervals in which communication equipments should try to get the original or initial data rate, after the data rate has been decreased by the network, namely, the communication equipment does not wait until the network informs it that more bandwidth is available, but rather polls the network requesting more bandwidth etc.

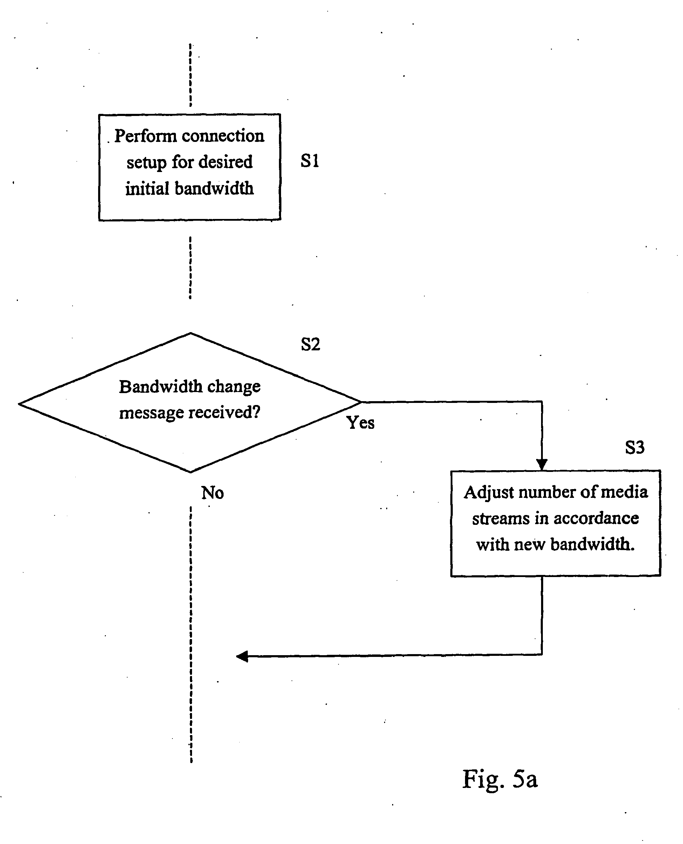

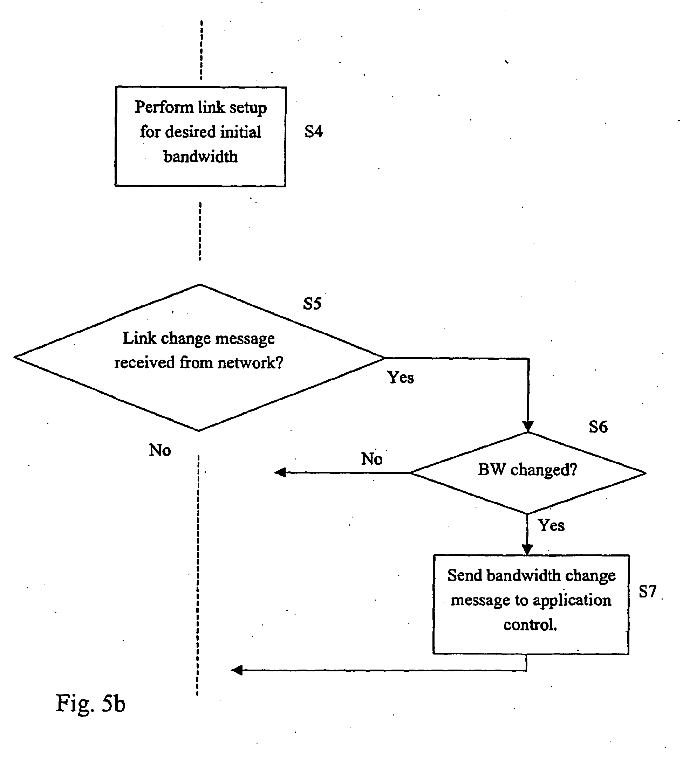

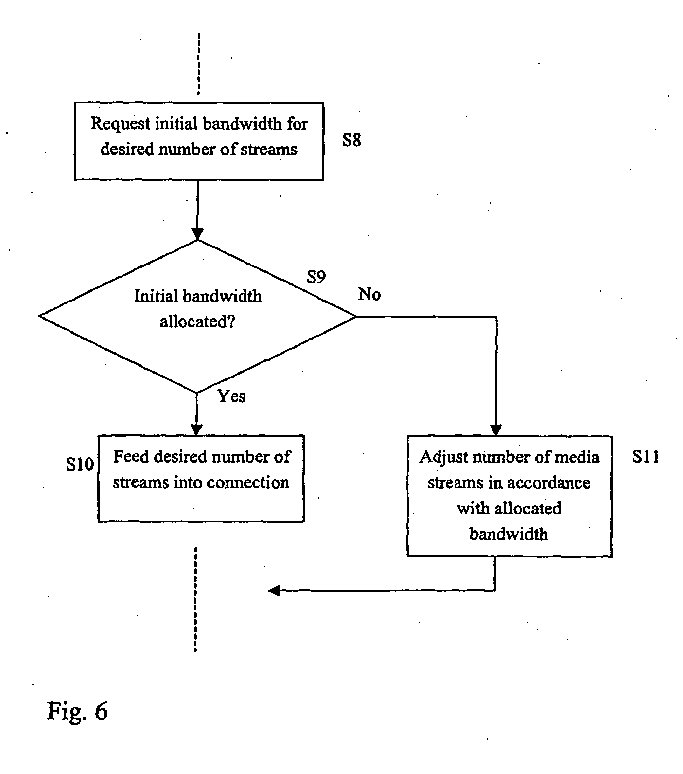

Now some examples of control steps implemented in the media stream providing equipment 1 and the communication equipment 2 will be described in Figs. 5a, 5b and 6.

Fig. 5a shows a partial flow chart, in which steps are shown that are performed in one embodiment of the control procedure 10 in the application layer of the media stream providing equipment 1. Namely, in a first step S1 a set-up of connection 6 for a given initial bandwidth BW is performed. Then, as indicated by the dotted line, a suitable and appropriate media stream management control is performed, which is not shown here, as it does not relate to the present invention. In this media stream control procedure, a step S2 is introduced, which checks if a bandwidth change message has been received. If not, then the usual media stream control is continued, whereas if the bandwidth change message is received, an adjustment step S3 is performed in which the number of media streams in accordance with the new bandwidth is adjusted. Then the usual control procedure is continued. As already mentioned the bandwidth change message can be received from an entity in the network, but is preferably received from the communication equipment 2 (e.g. interface control 27 shown in Fig. 3).

Fig. 5b shows a partial flow chart of steps implemented in the interface control 27. Namely, in a step S4 (which corresponds to step S1 in Fig. 5a), a link set-up in accordance with the requested initial bandwidth is performed. Then, as indicated by the dotted lines, the usual link control is associated with the network interface layer (link layer) is performed. This control is not shown as it is not related to the present invention. In accordance with the present embodiment of the invention, a step S5 is introduced into the control procedure, which checks if a link change message has been received from the network. An example of such a link change message is the above mentioned assignment command of a new bandwidth. If no such messages have been received, then the usual link control is continued. If such a link change message has been received, it is first determined in a step S6 if the bandwidth has changed, and if yes, then a bandwidth change message is sent to the application layer in step S7. Thereafter the usual link control is continued.

It may be noted that the step S6 shown in Fig. 5b could also be omitted, and the link change message could simply be forwarded to the application layer, where the adjustment procedure for determining if a media stream is to be dropped or not would analyse the link change message at the application layer.

Fig. 6 shows a partial flow chart of a control procedure of the application layer, which relates to an embodiment of the present invention, in which the adjustment of the number of media streams fed into a connection is performed in response to bandwidth allocation information issued during a set-up procedure for the connection. In a step S8, an initial bandwidth for a predetermined number of media streams is requested. Then, in step S9 it is checked if the network has allocated this requested bandwidth. If yes, the predetermined number of streams is fed into connection, as shown in step S10. Thereafter the usual control procedure continues. If the outcome of step S9 is negative, then the number of streams to be fed into the connection is adjusted in accordance with the allocated bandwidth. Thereafter the usual control procedure is continued.

It may be noted that the embodiment of Fig. 6 can be combined with the embodiment of Fig. 5a, namely where step S1 of Fig. 5a is replaced by steps S8 to S11 shown in Fig. 6. In other words, after having performed the control procedure of Fig. 6, it is possible that the application performs further adjustments of the number of media streams fed into the connection, if the bandwidth of the connection changes.

Although the invention has been described on the basis of specific embodiments, the described details are only intended to provide a clearer understanding of certain aspects and advantages but are not to be understood as restrictive, because the present invention is defined by the scope of the appended claims. Furthermore, reference signs in the claims serve to make the claims easier to read, but do not restrict the scope.

## Claims

1. A method for controlling the transmission of media streams (31,32,33, 34,35) over a connection (6) that employs a plurality of protocol layers (201,202,203), comprising:
feeding one or more media streams (31,32,33,34) into said connection (6) at a first protocol layer in accordance with a control procedure (10) implemented at said first protocol layer,
obtaining at a second protocol layer (202) below said first protocol layer information (4) that is indicative of the bandwidth provided in said connection (6) for the transmission of data from said first protocol layer,
providing said information (4) that is indicative of the bandwidth to said control procedure (10) at said first protocol layer, and
adjusting the number of media streams (31,32,33,34) fed into said connection (6) at said first protocol layer and the data rates of one or more media streams fed into said connection in accordance with said information (4) that is indicative of the bandwidth.

2. A method according to claim 1, wherein said information (4) that is indicative of the bandwidth is connection state change information that indicates a change in the state of said connection (6).

3. A method according to claim 2, wherein said connection state change information is bandwidth change information that indicates a change in the bandwidth provided in said connection (6).

4. A method according to claim 1, wherein said information (4) that is indicative of the bandwidth is bandwidth allocation information issued during a set-up procedure for said connection (6).

5. A method according to one of claims 1 to 4, wherein said method is implemented in a communication device (100), and said information (4) that is indicative of the bandwidth is obtained in said communication device (100).

6. A method according to one of claims 1 to 5, wherein said connection (6) is provided by a transmission system that comprises a communication network (5), and said information (4) that is indicative of the bandwidth is generated on the basis of control information provided by a control entity (41) situated in said communication network (5).

7. A method according to claim 6, wherein said communication network (5) is a cellular mobile communication network, said method is implemented in a mobile station capable of communicating over said cellular mobile communication network, and said information (4) that is indicative of the bandwidth is generated in response to the initiating of a handover procedure in said cellular mobile communication network.

8. A method according to claim 7, wherein said cellular mobile communication network comprises a first type of cell in which communications are performed in accordance with a first telecommunications standard, and a second type of cell in which communications are performed in accordance with a second telecommunications standard.

9. A method according to claim 8, wherein said information (4) that is indicative of the bandwidth is generated in response to the initiating of a handover procedure from a cell of said first type or said second type to a cell of the other type.

10. A method according to claim 8 or 9, wherein said first telecommunications standard is the Global System for Mobile (GSM) communications standard and said second standard is the Universal Mobile Telecommunication System (UMTS) standard.

11. A computer program arranged to perform the method of one of claims 1 to 10 when loaded into the memory of a data processing device and executed by said data processing device.

12. A data carrier carrying the computer program of claim 11.

13. A communication system (100) having media stream providing equipment (1) and communication equipment (2), said communication equipment (2) being operable to set-up a connection (6) that employs a plurality of protocol layers (201,202,203), over which media streams (31,32,33,34) provided by said media stream providing equipment (1) may be transmitted, said communication system comprising a control system (10,27) arranged to feed one or more media streams (31,32,33, 34) into said connection (6) at a first protocol layer in accordance with a control procedure (10) implemented at said first protocol layer, and to adjust the number of media streams (31,32,33,34) fed into said connection (6) at said first protocol layer and the data rates of one or more media streams fed into said connection in accordance with an information (4) that is indicative of the bandwidth in said connection (6), said information (4) being received from a second protocol layer (202) below said first protocol layer.

14. A communication system (100) according to claim 13, wherein said media stream providing equipment (1) and communication equipment (2) are provided in a single physical unit.

15. A communication system (100) according to claim 14, wherein said communication system (100) is a mobile telephone.

16. A communication system (100) according to one of claims 13 to 15, wherein said information (4) that is indicative of the bandwidth is connection state change information that indicates a change in the state of said connection (6).

17. A communication system(100) according to claim 16, wherein said connection state change information is bandwidth change information that indicates a change in the bandwidth provided in said connection (6).

18. A communication system (100) according to one of claims 13 to 15, wherein said information (4) that is indicative of the bandwidth is bandwidth allocation information issued during a set-up procedure for said connection (6).

19. A communication system (100) according to one of claims 13 to 18, wherein said connection (6) is provided by a transmission system that comprises a communication network(5), and said information (4) that is indicative of the bandwidth is generated on the basis of control information provided by a control entity (41) situated in said communication network (5).

20. A communication system (100) according to claim 19, wherein said communication system (100) is arranged such that said information (4) that is indicative of the bandwidth is generated in said communication system (100).

21. A communication system (100) according to claim 19 or 20, wherein said communication network (5) is a cellular mobile communication network, said method is implemented in a mobile station capable of communicating over said cellular mobile communication network, and said information (4) that is indicative of the bandwidth is generated in response to the initiating of a handover procedure in said cellular mobile communication network.

22. A communication system (100) according to claim 21, wherein said cellular mobile communication network comprises a first type of cell in which communications are performed in accordance with a first telecommunications standard, and a second type of cell in which communications are performed in accordance with a second telecommunications standard.

23. A communication system (100) according to claim 22, wherein said information (4) that is indicative of the bandwidth is generated in response to the initiating of a handover procedure from a cell of said first type or said second type to a cell of the other type.

24. A communication system (100) according to claim 22 or 23, wherein said first telecommunications standard is the Global System for Mobile (GSM) communications standard and said second standard is the Universal Mobile Telecommunication System (UMTS) standard.

## Patentansprüche

1. Ein Verfahren zum Steuern der Übertragung von Medienströmen (31, 32, 33, 34, 35) über eine Verbindung (6), die eine Vielzahl von Protokollschichten (201, 202, 203) einsetzt, umfassend:
Einspeisen von einem oder mehr Medienströmen (31, 32, 33, 34) in die Verbindung (6) in einer ersten Protokollschicht in Übereinstimmung mit einer Steuerprozedur (10), die in der ersten Protokollschicht implementiert ist,
Erhalten in einer zweiten Protokollschicht (202) unter der ersten Protokollschicht von Information (4), die die Bandbreite anzeigt, die in der Verbindung (6) bereitgestellt wird für die Übertragung von Daten von der ersten Protokollschicht,
Bereitstellen der Information (4), die die Bandbreite anzeigt, zu der Steuerprozedur (10) in der ersten Protokollschicht, und
Abstimmen der Zahl von Medienströmen (31, 32, 33, 34), die in die Verbindung (6) in der ersten Protokollschicht eingespeist werden und der Datenraten von einem oder mehr Medienströmen, die in die Verbindung eingespeist werden in Übereinstimmung mit der Information (4), die die Bandbreite anzeigt.

2. Ein Verfahren nach Anspruch 1, wobei die Information (4), die die Bandbreite anzeigt, Verbindungszustandsänderungsinformation ist, die eine Änderung in dem Zustand der Verbindung (6) anzeigt.

3. Ein Verfahren nach Anspruch 2, wobei die Verbindungszustandsänderungsfunktion Bandbreitenänderungsinformation ist, die eine Änderung in der Bandbreite anzeigt, die in der Verbindung (6) bereitgestellt wird.

4. Ein Verfahren nach Anspruch 1, wobei die Information (4), die die Bandbreite anzeigt, Bandbreitenzuordnungsinformation ist, die während einer Einrichtungsprozedur für die Verbindung (6) abgegeben wird.

5. Ein Verfahren nach einem von Ansprüchen 1 bis 4, wobei das Verfahren in einer Kommunikationseinrichtung (100) implementiert ist, und die Information (4), die die Bandbreite anzeigt, in der Kommunikationseinrichtung (100) erhalten wird.

6. Ein Verfahren nach einem von Ansprüchen 1 bis 5, wobei die Verbindung (6) durch ein Übertragungssystem bereitgestellt wird, das ein Kommunikationsnetz (5) umfasst, und die Information (4), die die Bandbreite anzeigt, auf der Basis von Steuerinformation generiert wird, die durch eine Steuerentität (41) bereitgestellt wird, die sich in dem Kommunikationsnetz (5) befindet.

7. Ein Verfahren nach Anspruch 6, wobei das Kommunikationsnetz (5) ein zellulares mobiles Kommunikationsnetz ist, das Verfahren in einer Mobilstation implementiert ist, die zum Kommunizieren über das zellulare mobile Kommunikationsnetz fähig ist, und die Information (4), die die Bandbreite anzeigt, als Reaktion auf das Initiieren einer Übergabeprozedur in dem zellularen mobilen Kommunikationsnetz generiert wird.

8. Ein Verfahren nach Anspruch 7, wobei das zellulare mobile Kommunikationsnetz umfasst einen ersten Typ einer Zelle, worin Kommunikationen in Übereinstimmung mit einem ersten Telekommunikationsstandard durchgeführt werden, und einen zweiten Typ einer Zelle, worin Kommunikationen in Übereinstimmung mit einem zweiten Telekommunikationsstandard durchgeführt werden.

9. Ein Verfahren nach Anspruch 8, wobei die Information (4), die die Bandbreite anzeigt, als Reaktion auf das Initiieren einer Übergabeprozedur von einer Zelle des ersten Typs oder des zweiten Typs zu einer Zelle des anderen Typs generiert wird.

10. Ein Verfahren nach Anspruch 8 oder 9, wobei der erste Telekommunikationsstandard der Standard des globalen Systems für mobile Kommunikationen (GSM) ist, und der zweite Standard der Standard des universellen mobilen Telekommunikationssystems (UMTS) ist.

11. Ein Computerprogramm, das angeordnet ist, das Verfahren nach einem von Ansprüchen 1 bis 10 durchzuführen, wenn es in dem Speicher einer Datenverarbeitungseinrichtung geladen und durch die Datenverarbeitungseinrichtung ausgeführt wird.

12. Ein Datenträger, der das Computerprogramm nach Anspruch 11 überträgt.

13. Ein Kommunikationssystem (100) mit einer Medienstrom-Bereitstellungsausrüstung (1) und Kommunikationsausrüstung (2), wobei die Kommunikationsausrüstung (2) betriebsfähig ist, eine Verbindung (6) einzurichten, die eine Vielzahl von Protokollschichten (201, 202, 203) einsetzt, worüber Medienströme (31, 32, 33, 34), die durch die Medienstrom-Bereitstellungsausrüstung (1) bereitgestellt werden, übertragen werden können, das Kommunikationssystem umfassend ein Steuersystem (10, 27), das angeordnet ist, einen oder mehr Medienströme (31, 32, 33, 34) in die Verbindung (6) in einer ersten Protokollschicht in Übereinstimmung mit einer Steuerprozedur (10) einzuspeisen, die in der ersten Protokollschicht implementiert ist, und die Zahl von Medienströmen (31, 32, 33, 34), die in die Verbindung (6) in der ersten Protokollschicht eingespeist werden, und die Datenraten von einem oder mehr Medienströmen, die in die Verbindung eingespeist werden, in Übereinstimmung mit einer Information (4) abzustimmen, die die Bandbreite in der Verbindung (6) anzeigt, wobei die Information (4) von einer zweiten Protokollschicht (202) unter der ersten Protokollschicht empfangen wird.

14. Ein Kommunikationssystem (100) nach Anspruch 13, wobei die Medienstrom-Bereitstellungsausrüstung (1) und die Kommunikationsausrüstung (2) in einer einzelnen physikalischen Einheit vorgesehen sind.

15. Ein Kommunikationssystem (100) nach Anspruch 14, wobei das Kommunikationssystem (100) ein Mobiltelefon ist.

16. Ein Kommunikationssystem (100) nach einem von Ansprüchen 13 bis 15, wobei die Information (4), die die Bandbreite anzeigt, Verbindungszustandsänderungsinformation ist, die eine Änderung in dem Zustand der Verbindung (6) anzeigt.

17. Ein Kommunikationssystem (100) nach Anspruch 16, wobei die Verbindungszustandsänderungsinformation Bandbreitenänderungsinformation ist, die eine Änderung in der Bandbreite anzeigt, die in der Verbindung (6) bereitgestellt wird.

18. Ein Kommunikationssystem (100) nach einem von Ansprüchen 13 bis 15, wobei die Information (4), die die Bandbreite anzeigt, Band breiten zuordnungs information ist, die während einer Einrichtungsprozedur für die Verbindung (6) abgegeben wird.

19. Ein Kommunikationssystem (100) nach einem von Ansprüchen 13 bis 18, wobei die Verbindung (6) durch ein Übertragungssystem bereitgestellt wird, das ein Kommunikationsnetz (5) umfasst, und die Information (4), die die Bandbreite anzeigt, auf der Basis von Steuerinformation generiert wird, die durch eine Steuerentität (41) bereitgestellt wird, die sich in dem Kommunikationsnetz (5) befindet.

20. Ein Kommunikationssystem (100) nach Anspruch 19, wobei das Kommunikationssystem (100) derart angeordnet ist, dass die Information (4), die die Bandbreite anzeigt, in dem Kommunikationssystem (100) generiert wird.

21. Ein Kommunikationssystem (100) nach Ansprüchen 19 oder 20, wobei das Kommunikationsnetz (5) ein zellulares mobiles Kommunikationsnetz ist, das Verfahren in einer Mobilstation implementiert ist, die zum Kommunizieren über das zellulare mobile Kommunikationsnetz fähig ist, und die Information (4), die die Bandbreite anzeigt, als Reaktion auf das Initiieren einer Übergabeprozedur in dem zellularen mobilen Kommunikationsnetz generiert wird.

22. Ein Kommunikationssystem (100) nach Anspruch 21, wobei das zellulare mobile Kommunikationsnetz umfasst einen ersten Typ einer Zelle, worin Kommunikationen in Übereinstimmung mit einem ersten Telekommunikationsstandard durchgeführt werden, und einen zweiten Typ einer Zelle, worin Kommunikationen in Übereinstimmung mit einem zweiten Telekommunikationsstandard durchgeführt werden.

23. Ein Kommunikationssystem (100) nach Anspruch 22, wobei die Information (4), die die Bandbreite anzeigt, als Reaktion auf das Initiieren einer Übergabeprozedur von einer Zelle des ersten Typs oder des zweiten Typs zu einer Zelle des anderen Typs generiert wird.

24. Ein Kommunikationssystem (100) nach Anspruch 22 oder 23, wobei der erste Telekommunikationsstandard der Standard des globalen Systems für mobile Kommunikationen (GSM) ist, und der zweite Standard der Standard des universellen mobilen Telekommunikationssystems (UMTS) ist.

## Revendications

1. Procédé de commande de la transmission de flux de données multimédia (31, 32, 33, 34, 35) sur une connexion (6) qui utilise une pluralité de couches de protocole (201, 202, 203), comprenant les étapes consistant à :
injecter un ou plusieurs flux de données multimédia (31, 32, 33, 34) sur ladite connexion (6) au niveau d'une première couche de protocole, selon une procédure de commande (10) mise en oeuvre dans ladite couche de protocole ;
au niveau d'une seconde couche de protocole (202), inférieure à ladite première couche de protocole, obtenir des informations (4) qui indiquent la bande passante fournie sur ladite connexion (6) pour la transmission des données provenant de ladite première couche de protocole ;
fournir lesdites informations (4) qui indiquent la bande passante à ladite procédure de commande (10) de ladite première couche de protocole ; et
ajuster le nombre des flux de données multimédias (31, 32, 33, 34) injectés sur ladite connexion (6) au niveau de ladite première couche de protocole ainsi que les débits de données d'un ou plusieurs flux de données multimédias injectés sur ladite connexion, en fonction desdites informations (4) qui indiquent la bande passante.

2. Procédé selon la revendication 1, dans lequel lesdites informations (4) qui indiquent la bande passante sont des informations de changement d'état de la connexion qui indiquent un changement de l'état de ladite connexion (6).

3. Procédé selon la revendication 2, dans lequel lesdites informations de changement d'état de la connexion sont des informations de changement de la bande passante qui indiquent un changement dans la bande passante fournie sur ladite connexion (6).

4. Procédé selon la revendication 1, dans lequel lesdites informations (4) qui indiquent la bande passante sont des informations d'attribution de bande passante qui sont fournies pendant une procédure d'établissement de ladite connexion (6).

5. Procédé selon l'une des revendications 1 à 4, dans lequel ledit procédé est mis en oeuvre sur un dispositif de communication (100) et lesdites informations (4) qui indiquent la bande passante sont obtenues dans ledit dispositif de communication (100).

6. Procédé selon l'une des revendications 1 à 5, dans lequel ladite connexion (6) est fournie par un système de transmission qui comprend un réseau de communication (5) et lesdites informations (4) qui indiquent la bande passante sont produites sur la base d'informations de commande fournies par une entité de commande (41) située dans ledit réseau de communication (5).

7. Procédé selon la revendication 6, dans lequel ledit réseau de communication (5) est un réseau de communication mobile cellulaire, ledit procédé est mis en oeuvre dans une station mobile en mesure de communiquer sur ledit réseau de communication mobile cellulaire et lesdites informations (4) qui indiquent la bande passante sont produites en réponse au lancement d'une procédure de transfert sur ledit réseau de communication mobile cellulaire.

8. Procédé selon la revendication 7, dans lequel ledit réseau de communication mobile cellulaire comprend un premier type de cellule, dans lequel les communications s'effectuent selon une première norme de télécommunications, et un second type de cellule, dans lequel les communications s'effectuent selon une seconde norme de télécommunications.

9. Procédé selon la revendication 8, dans lequel lesdites informations (4) qui indiquent la bande passante sont produites en réponse au lancement d'une procédure de transfert entre une cellule dudit premier type ou dudit second type et une cellule de l'autre type.

10. Procédé selon la revendication 8 ou 9, dans lequel ladite première norme de télécommunications est la norme de communication GSM (pour *« Global System for Mobile Communication* » - Système mondial de communication mobile) et ladite seconde norme est la norme UMTS (pour « *Universal Mobile Telecommunication System » -* Système universel de télécommunications mobiles).

11. Programme d'ordinateur agencé pour exécuter le procédé selon une des revendications 1 à 10 lorsqu'il est chargé dans la mémoire d'un dispositif de traitement de données et exécuté par ledit dispositif de traitement de données.

12. Support de données portant le programme d'ordinateur selon la revendication 11.

13. Système de communication (100) possédant un équipement de fourniture de flux de données multimédia (1) et un équipement de communication (2), ledit équipement de communication (2) étant en mesure d'établir une connexion (6) qui utilise une pluralité de couches de protocole (201, 202, 203), sur laquelle peuvent être transmis des flux de données multimédia (31, 32, 33, 34) fournis par ledit équipement de fourniture de flux de données multimédia (1), ledit système de communication comprenant un système de commande (10, 27) conçu pour injecter un ou plusieurs flux de données multimédia (31, 32, 33, 34) sur ladite connexion (6) au niveau d'une première couche de protocole, selon une procédure de commande (10) mise en oeuvre dans ladite première couche de protocole et pour ajuster le nombre des flux de données multimédia (31, 32, 33, 34) injectés sur ladite connexion (6) au niveau de ladite première couche de protocole ainsi que les débits de données d'un ou plusieurs flux de données multimédia injectés sur ladite connexion, en fonction d'informations (4) qui indiquent la bande passante sur ladite connexion (6), lesdites informations (4) étant reçues d'une seconde couche de protocole (202), inférieure à ladite première couche de protocole.

14. Système de communication (100) selon la revendication 13, dans lequel ledit équipement de fourniture de flux de données multimédia (1) et ledit équipement de communication (2) sont fournis dans une unité physique unique.

15. Système de communication (100) selon la revendication 14, dans lequel ledit système de communication (100) est un téléphone mobile.

16. Système de communication (100) selon l'une des revendications 13 à 15, dans lequel lesdites informations (4) qui indiquent la bande passante sont des informations de changement d'état de la connexion qui indiquent un changement de l'état de ladite connexion (6).

17. Système de communication (100) selon la revendication 16, dans lequel lesdites informations de changement d'état de la connexion sont des informations de changement de la bande passante qui indiquent un changement dans la bande passante fournie sur ladite connexion (6).

18. Système de communication (100) selon l'une des revendications 13 à 15, dans lequel lesdites informations (4) qui indiquent la bande passante sont des informations d'attribution de bande passante qui sont fournies pendant une procédure d'établissement de ladite connexion (6).

19. Système de communication (100) selon l'une des revendications 13 à 18, dans lequel ladite connexion (6) est fournie par un système de transmission qui comprend un réseau de communication (5) et lesdites informations (4) qui indiquent la bande passante sont produites sur la base d'informations de commande fournies par une entité de commande (41) située dans ledit réseau de communication (5).

20. Système de communication (100) selon la revendication 19, dans lequel ledit système de communication (100) est agencé de manière à ce que lesdites informations (4) qui indiquent la bande passante soient produites dans ledit système de communication (100).

21. Système de communication (100) selon la revendication 19 ou 20, dans lequel ledit réseau de communication (5) est un réseau de communication mobile cellulaire, ledit procédé est mis en oeuvre dans une station mobile en mesure de communiquer sur ledit réseau de communication mobile cellulaire et lesdites informations (4) qui indiquent la bande passante sont produites en réponse au lancement d'une procédure de transfert sur ledit réseau de communication mobile cellulaire.

22. Système de communication (100) selon la revendication 21, dans lequel ledit réseau de communication mobile cellulaire comprend un premier type de cellule, dans lequel les communications s'effectuent selon une première norme de télécommunications, et un second type de cellule, dans lequel les communications s'effectuent selon une seconde norme de télécommunications.

23. Système de communication (100) selon la revendication 22, dans lequel lesdites informations (4) qui indiquent la bande passante sont produites en réponse au lancement d'une procédure de transfert entre une cellule dudit premier type ou dudit second type et une cellule de l'autre type.

24. Système de communication (100) selon la revendication 22 ou 23, dans lequel ladite première norme de télécommunications est la norme de communication GSM (pour *« Global System for Mobile Communication » -* Système mondial de communication mobile) et ladite seconde norme est la norme UMTS (pour « *Universal Mobile Telecommunication System* » - Système universel de télécommunications mobiles).
